# EUROPEAN PATENT APPLICATION

(11) **EP 4 715 204 A1**
(43) Date of publication of application: **25.03.2026**
(21) Application number: 24201557.6
(22) Date of filing: 20.09.2024
(51) Int. Cl.: F03D 80/50

(54) **WIND TURBINE ROTOR LOCKING**

(71) Applicant: Siemens Gamesa Renewable Energy A/S, 7330 Brande (DK)
(72) Inventor: Zachariassen, Tor, 7330 Brande (DK); Booth, James Kenneth, 7330 Brande (DK)
(74) Representative: SGRE-Association

(57) **Abstract**

It is described a locking system, including an electric motor system and method of locking a rotor and in particular detecting when a rotor (3) of a wind turbine (40) is in a rotor locking position for locking the rotor, the wind turbine comprising a stator (2) relative to which the rotor (3) is rotatable, the method comprising: rotating the rotor (3); receiving sensor output data (12) from a sensor system (10) sensitive to distance between stator and rotor components; analysing the sensor output data (12); indicating when the rotor locking position is reached based on the analysed sensor output data.

## Description

### Field of invention

The present invention relates to a method and to a corresponding rotor locking system for locking a rotor of a wind turbine which may or may not include a method and a corresponding arrangement of detecting when a rotor of a wind turbine is in a rotor locking position. Furthermore, the present invention relates to a generator system and to a wind turbine.

### Art Background

EP 4 156 475 A1 discloses a rotor lock for an electrical machine which engages the stator and the rotor for preventing the rotor from rotating with respect to the stator.

EP 2 690 284 A1 discloses a wind turbine generator and maintenance of its main bearing. The rotor comprises a front element having a plurality of holes at positions alignable with the cylindrical elements such that the rotor is fixable to the stator by inserting a fastening member through a cylindrical element and a hole aligned with the cylindrical element.

DE 10 2004 028 746 A1 discloses a tower head of a wind turbine which comprises equipment for holding the rotor at the tower head.

For locking the rotor relative to the stator, the rotor needs to be fixed with locking equipment at the stator. Conventionally, the positioning of the rotor requires inspection by maintenance personnel. Therefore, the locking operation has been observed to be cumbersome and time-consuming and not to be in all circumstances reliable.

Thus, there may be a need for a method of locking a rotor providing a safe and reliable locking of the rotor, in particular in a fast manner. Furthermore, there may be a need for a corresponding rotor locking system and there may be a need for a wind turbine enabling a safe and reliable locking of a rotor. Further, there may be a need for a method and a corresponding arrangement of detecting when a rotor of the wind turbine is in a rotor locking position, wherein a reliable and accurate alignment of the rotor is enabled, in particular also in cases where the rotor locking equipment is partially hidden or not visible for maintenance personnel. Furthermore,

### Summary of the Invention

This need may be met by the subject matter according to the independent claims. Advantageous embodiments of the present invention are described by the dependent claims.

Embodiments of the present invention in particular provide advantages when a rotor lock system is moved inside the stator such that it is hard to monitor or observe components of the rotor lock system by maintenance personnel.

According to an embodiment of the present invention it is provided a rotor locking system (described further below in more detail) for locking a rotor of a wind turbine, the wind turbine comprising a stator relative to which the rotor is rotatable, the rotor locking system comprising: at least one rotor locking body mounted on the rotor and providing a rotor locking opening; at least one locking bolt insertable into the rotor locking opening when the rotor of the wind turbine is in a rotor locking position; an electric motor system configured to insert the locking bolt into and/or to withdraw the locking bolt from the rotor locking opening.

Thereby, a hydraulic system including plural pipes having risk of leakage may be dispensed with.

According to an embodiment of the present invention the electric motor system comprises: an electric motor having a drive shaft; a mechanical screwjack connected to the locking bolt; the mechanical screwjack being engaged by the drive shaft such that rotating the drive shaft of the electric motor causes translating the locking bolt; in particular a brake.

According to an embodiment of the present invention the rotor locking system further comprising at least one of: a disengagement sensor and/or engagement sensor connected to the electric motor system or a brake of the electric motor system; a frequency converter connected to the motor system.

According to an embodiment of the present invention the rotor locking system further comprising an arrangement for detecting when the rotor of the wind turbine is in the rotor locking position for locking the rotor, the arrangement comprising: a sensor system mounted on the stator and/or the rotor and providing sensor output data; a processor configured: to analyse the sensor output data; to indicate when the rotor locking position is reached based on the analysed sensor output data.

According to an embodiment of the present invention it is provided a method for locking a rotor of a wind turbine, the wind turbine comprising a stator relative to which the rotor is rotatable, the method comprising: inserting a locking bolt from the stator into a rotor lock opening when the rotor is in a rotor locking position, thereby using an electric motor system, in particular of a rotor locking system according to one of the preceding embodiments.

According to an embodiment of the present invention the method further comprises to perform a method of detecting when a rotor of a wind turbine is in a rotor locking position for locking the rotor, the wind turbine comprising a stator relative to which the rotor is rotatable, the method comprising: rotating the rotor; receiving sensor output data from a sensor system sensitive to distance between stator and rotor components; analysing the sensor output data; indicating when the rotor locking position is reached based on the analysed sensor output data.

The method may for example be implemented in software and/or hardware and/or may be performed by a controller or an arrangement for detecting when a rotor of a wind turbine is in a rotor locking position according to embodiments of the present invention. The arrangement may for example be a portion of a wind turbine controller.

The rotor may or may not have mounted thereon plural wind turbines or wind turbine blades. The method may for example be performed in order to lock the rotor for attaching one or more wind turbine blades or for removing one or more wind turbine blades.

The rotor locking position may in particular correspond to a rotor position in which or during which a wind turbine blade is oriented substantially in a horizontal orientation or in which a wind turbine blade may for example be mounted to the rotor (in particular to a hub of the rotor) being in a substantially horizontal position. With respect to each of plural wind turbine blades, the rotor may have a specific rotor locking position.

For locking the rotor, when in the rotor locking position, one or more locking pins or locking bolts or locking mandrels guided and moved from equipment provided at the stator may be inserted in one or more locking openings which may be provided at the rotor, in particular a rotor house. When the rotor is in the rotor locking position, the pins/bolts, mandrels may be aligned with respective rotor locking openings such that they can be inserted into those rotor locking openings.

The rotor may be rotated with a relatively small angular velocity, such as between 0.01 rpm and 0.1 rpm. While rotating the rotor, sensor output data may be received from the sensor system, for example as sampled data. The sensor system may be configured to monitor whether a distance between a stator component and a rotor component is in a predetermined distance range or whether the distance is smaller than a threshold distance for example. The sensor system may include optical and/or inductive sensitive components. The sensor system may comprise a proximity sensor for example detecting a distance by optical means. The sensor system may substantially be mounted or arranged at the stator (and/or at the rotor). The sensor system may measure or determine distance information relative to measurement areas located at the rotor (and/or the stator). In particular, the sensor system may determine or measure distance information regarding components or equipment at the rotor which are utilized for locking the rotor. In particular, the sensor system may determine distance information relating to or surrounding material of a rotor locking opening. In particular, the sensor system may be configured to determine or monitor distance information regarding plural monitoring areas at the rotor, in particular at least two monitoring areas or at least three monitoring areas.

Analysing the sensor output data may in particular take into account pre-knowledge about the geometrical configuration of the rotor locking equipment arranged at the rotor. The sensor output data may for example comprise binary distance information regarding threshold distance of one or more monitoring areas at the rotor. From the sensor output data, in particular distance information regarding three monitoring areas at the rotor, the relative location or positioning of the rotor locking equipment relative to the stator may be inferred. The method may not require any more monitoring or detecting when the rotor is in the locked position by maintenance personnel. Thereby, also systems, in which rotor locking equipment is not visible from outside, may be supported.

According to an embodiment of the present invention, while in the rotor locking position a rotor locking body mounted on the rotor is at a predetermined position relative to the stator and/or the sensor system, the rotor locking body including a rotor lock opening, the stator including a locking bolt insertable (e.g. along an axial direction and/or radial direction) into the rotor lock opening when the rotor is in the rotor locking position.

The rotor locking body may for example include a metallic locking body for example mounted or arranged at a rotor house. The rotor may be an outer rotor or an inner rotor. At the rotor house, plural permanent magnets may be mounted. The stator together with the rotor may form an electric generator, in particular permanent magnet synchronous generator of the wind turbine. The rotor may be coupled to a hub at which plural rotor blades are mountable or mounted. The locking bolt may also be referred to as locking pin or locking mandrel.

The locking bolt may be inserted (in particular from the stator in axial direction) using a hydraulic system and/or a mechanical/electric system, for example an electric motor as will be explained below. The locking bolt may substantially have a cylindrical geometry (e.g. symmetry axis parallel to the axial direction) and being provided with a size, for example diameter of the cylinder, which matches or corresponds correspondingly to the diameter of the in particular cylindrical rotor locking opening. Thereby, a reliable locking may be achieved.

According to an embodiment of the present invention, the sensor system comprises at least one of: at least one, in particular two, optical sensor configured to detect when a portion of the rotor lock body is in a predetermined distance range; an inductive sensor configured to detect when a metallic portion of the rotor lock body is within a predetermined distance range.

The one or more optical sensors may each include a light source, for example an LED, and a light receiver light detector, for example photodiode. The optical sensors may be mounted at the stator and may be directed such as to shine light towards the rotor. The light impinging on the rotor may then be reflected and the reflected light may be detected by the light detectors comprised in the optical sensor. The optical sensors may be calibrated taking for example into account a reflectivity of the rotor portion which is illuminated by the light source and from which the light is (partially) reflected. From the detected intensity of the reflected light, it may be inferred whether the rotor area illuminated and probed by the optical sensor is within a predetermined distance range.

The inductive sensor may be configured to detect whether a metal comprising component of the rotor is in a predetermined distance range. Also the inductive sensor may be calibrated depending on the material of the rotor to enable inference of the distance being within the predetermined distance range or not. The inductive sensor may sense for example a voltage or a current which is induced in a measuring circuit due to presence or movement of a metallic portion of the rotor.

Having for example an optical sensor or in particular two optical sensors as well as at least one inductive sensor may improve the reliability of the detection of when the rotor is in the rotor locking position. The inductive sensor may for example distinguish between non-metallic material and metallic material being within a predetermined distance range.

According to an embodiment of the present invention the rotor is an outer rotor configured to rotate radially outwards from the stator, wherein the rotor locking body is configured as a substantially metallic body having a axially proximal face having an, in particular circular, edge encircling the rotor locking opening, the metallic body having a cylindrical recess extending axially (or radially) outwards from the edge and providing the rotor locking opening, wherein the sensor system is configured to detect when one or more portions of the axially (or radially) proximal face or the edge are or are not within a predetermined distance range, in particular smaller than a threshold distance.

The axially proximal face of the rotor locking body may provide one or more monitoring areas or spots which are monitored using the sensor system regarding the corresponding or the respective distance. Thereby, the structures defining the position of the rotor locking opening can be monitored regarding their position using the sensor system.

According to an embodiment of the present invention, the sensor system includes a first and a second optical sensor, each including a light source and a light detector, mounted (e.g. regarding their distance sensitive components) at the stator at positions differing in their circumferential position by a circumferential distance corresponding to or being slightly greater than a diameter of the edge of the locking equipment.

When the circumferential distance between the first and the second optical sensor (mounted at the stator) corresponds to or is slightly greater than a diameter of the edge of the locking equipment, both the first and the second optical sensor would indicate that particular areas at the rotor locking bodies are within a predetermined distance range in the case, when the rotor locking opening is positioned in between the first and the second optical sensor. Thereby, the positioning of the rotor locking opening may be monitored in an accurate manner.

According to an embodiment of the present invention, the sensor system includes an inductive sensor mounted at the stator at a position having a circumferential distance to a position of the first or the second optical sensor being smaller than a circumferential extent of the axially proximal face of the rotor locking equipment.

When the inductive sensor is positioned as specified, also the inductive sensor would indicate that a portion of the rotor locking body is within a predetermined distance range in the case that the rotor locking opening is in between the first and second optical sensor. Thereby, the inductive sensor may still further provide partially redundant information that the intended rotor locking position is reached. In other embodiments, the inductive sensor may be arranged at a different circumferential position relative to the first and second optical sensors.

According to an embodiment of the present invention, it is indicated that the rotor locking position is reached when the two optical sensors as well as the inductive sensor indicate rotor material to be present within a predetermined distance range or smaller than a threshold distance.

Thereby, a reliable information that the correct locked position is reached can be provided. When only one of the inductive sensor or the first or the second optical sensor indicate that a rotor area is not within the predetermined distance range, it may be concluded that the correct rotor locking position is not reached yet.

According to an embodiment of the present invention, the sensor output data include two or more binary output signals, wherein analysing the sensor output data comprises comparing the binary output signals with a predetermined pattern.

The binary output signals may simplify the analysis. For example, when the predetermined pattern indicates from all three sensors that the respective measurement areas are within the predetermined distance range, it may be concluded that the correct rotor locking position is reached. Thus, the pattern may for example be defined as high-state (binary "1") output by the three sensor portions.

According to an embodiment of the present invention it is provided a method for locking a rotor of a wind turbine, the wind turbine comprising a stator relative to which the rotor is rotatable, the method comprising: performing a method of detecting when the rotor of the wind turbine is in a rotor locking position for locking the rotor according to one of the preceding embodiments; inserting a locking bolt from the stator into a rotor locking opening when the rotor is in the rotor locking position.

The locking bolt may be inserted from the stator using a hydraulic system and/or a mechanical/electrical system, for example an electromotor.

According to an embodiment of the present invention, for inserting the locking bolt a hydraulic system including a compressor and plural hydraulic pipes is used, thereby supporting a conventional equipment.

According to an embodiment of the present invention, for inserting the locking bolt an electric motor system is used, the electric motor system engaging a mechanical screwjack connected to the locking bolt, wherein rotating a drive shaft of the electric motor system causes translating the locking bold/pin.

When an electrical motor system is utilized (in particular instead of a hydraulic system), oil pipes may be dispensed with and may not be required any more. It has conventionally been observed that oil leakage occurs which may in particular be problematic when the rotor locking equipment is partially installed inside the stator. Thus, embodiments of the present invention in particular support systems, where rotor locking equipment is arranged inside for example the stator. Due to the risk of oil leakage inside the stator, an electrical solution provides more safety reliability. Only electric wires nor oil pipes need to be installed for operating the system.

The mechanical screwjack may be driven by the electric motor. The screwjack spindle may be connected directly to the mandrel or bolt or pin which is then for locking the rotor inserted into the rotor locking opening.

It should be understood, that features, individually or in any combination, disclosed, described, provided or explained with respect to a method of detecting when a rotor of a wind turbine is in a rotor locking position may also, individually or in any combination applied to an arrangement for detecting when a rotor of a wind turbine is in a rotor locking position according to embodiments of the present invention and vice versa. This also applies to a method and a corresponding arrangement for locking a rotor of a wind turbine and also applies to a wind turbine.

According to an embodiment of the present invention it is provided (or included in a locking arrangement) an arrangement for detecting when a rotor of a wind turbine is in a rotor locking position for locking the rotor, the wind turbine comprising a stator relative to which the rotor is rotatable, the arrangement comprising: a sensor system mounted on the stator and providing sensor output data; a processor configured: to analyse the sensor output data; to indicate when the rotor locking position is reached based on the analysed sensor output data.

According to an embodiment of the present invention it is provided a rotor locking system for locking a rotor of a wind turbine, the wind turbine comprising a stator relative to which the rotor is rotatable, the rotor locking system comprising: at least one rotor locking body mounted on the rotor and providing a rotor locking opening; at least one locking bolt insertable into the rotor locking opening when the rotor of the wind turbine is in a rotor locking position; an arrangement for detecting when a rotor of a wind turbine is in the rotor locking position according to the preceding embodiment; in particular an electric motor system configured to insert the locking bolt into the rotor locking opening.

According to an embodiment of the present invention, the rotor locking system further comprises at least one of: a disengagement and/or engagement sensor connected to the electric motor system or a brake of the electric motor system; a frequency converter connected to the motor system.

Thereby, it may be reliably detected whether the locking bolt or locking mandrel is inserted or withdrawn as intended from the rotor locking opening. The disengagement sensor may for example monitor or measure whether the locking bolt is withdrawn from the rotor locking opening. The engagement sensor may for example detect whether the rotor locking body or locking mandrel is completely inserted into the rotor locking opening or not.

The frequency converter may enable to activate the motor system to for example turn with an intended or predetermined velocity for inserting the locking pin or locking bolt an intended translational velocity.

According to an embodiment of the present invention it is provided a generator system comprising: a stator; a rotor rotatable relative to the stator: a rotor locking system according to one of the preceding embodiments.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a portion of a generator system according to an embodiment of the present invention;
Fig. 2 schematically illustrates a sensor system employed according to embodiments of the present invention;
Fig. 3 schematically illustrates a rotor locking body employed according to embodiments of the present invention;
Figs. 4A,B,C,D schematically illustrate steps during performing a method for detecting when a rotor is in a rotor locking position according to embodiments of the present invention;
Fig. 5 schematically illustrates a wind turbine according to an embodiment of the present invention;
Fig. 6 schematically illustrates locking equipment which may be comprised in a rotor locking system according to an embodiment of the present invention;
Fig. 7 illustrates schematically rotor locking equipment which may be employed according to embodiments of the present invention; and
Fig. 8 schematically illustrates locking equipment as employed according to embodiments of the present invention.

### Detailed Description

The illustration in the drawings is in schematic form.

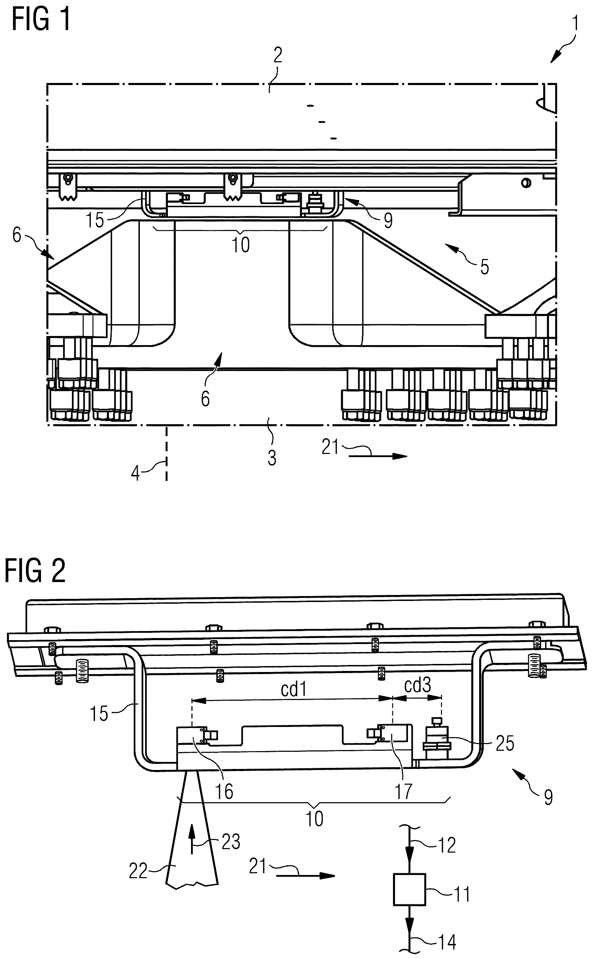

The generator system 1 partially and schematically illustrated in Fig. 1 includes a stator 2 and a rotor 3 which is rotatable relative to the stator, wherein a rotation axis is indicated with reference sign 4. The generator system 1 further includes a rotor locking system 5 according to an embodiment of the present invention.

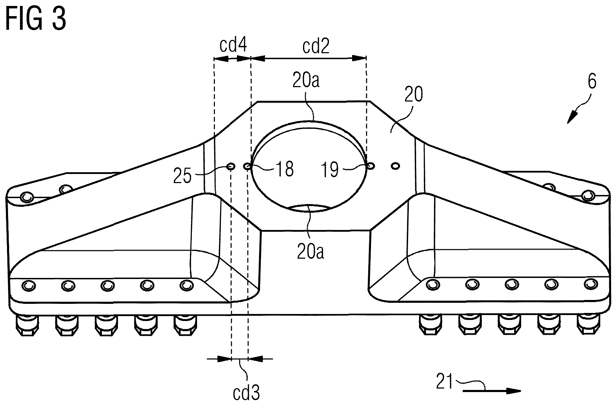

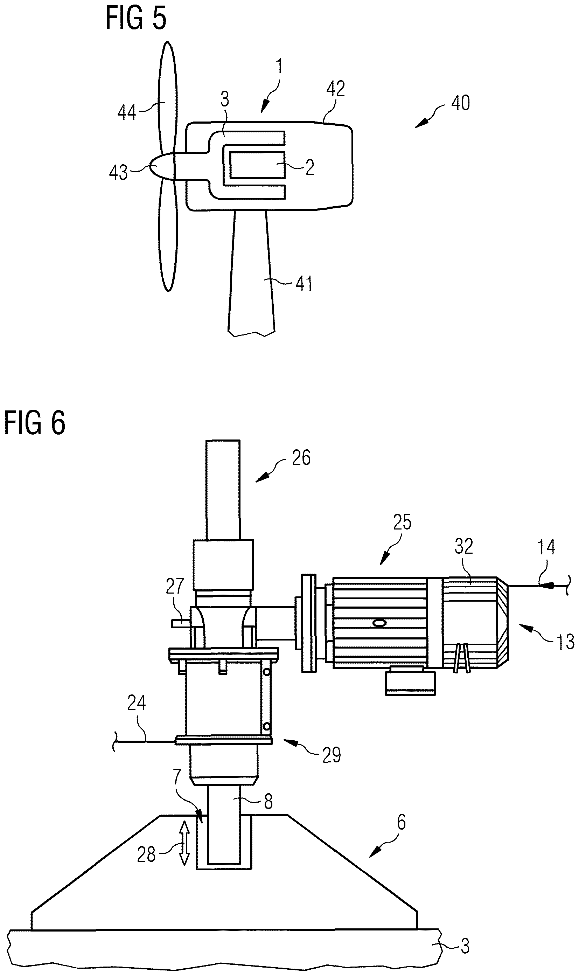

The rotor locking system 5 includes at least one rotor locking body 6 which is mounted on the rotor 3 and which provides a rotor locking opening 7 which can be seen in **Fig. 3****.** The rotor locking system 5 further includes at least one locking bolt 8 (see for example **Fig. 6****)** insertable into the rotor locking opening 7 when the rotor 3 is in the rotor locking position. Furthermore, the rotor locking system 5 comprises an arrangement 9 (see e.g. **Fig. 2****)** for detecting when the rotor 3 is in the rotor locking position.

The arrangement 9 for detecting when the rotor 3 is in a rotor locking position illustrated in Fig. 2 comprises a sensor system 10 which is mounted on the stator 2 and providing sensor output data 12. The arrangement 9 further comprises a processor 11 which is configured to receive the sensor output data 12 from the sensor system 10 and to analyse the sensor output data 12. The processor 11 is further configured to indicate when the rotor locking position is reached based on the analysed sensor output data.

The processor 11 may in particular further be configured to control movement of a locking bolt, for example locking bolt 8 illustrated in Fig. 6 to be inserted into the rotor locking opening 7 by for example controlling an electric motor system 13 illustrated for example in Fig. 6 by control signals 14.

As can be appreciated from Fig. 1, the sensor system 10 is mounted on the stator 2, in the present embodiment by a (position sensor) bracket 15. The rotor locking body 6 may be mounted at the rotor house of the rotor 3.

As can be seen for example in Fig. 2, the position sensor bracket 15 enables to mount a sensor system 10 which comprises a first optical sensor 16 and a second optical sensor 17 such that their respective circumferential distance cd1 has a particular value selected in dependence to a circumferential distance cd2 between opposing areas 18, 19 of an edge 20a of the rotor locking body 6 encircling the rotor locking opening 7, as can be appreciated from Fig. 3. The optical sensors 16, 17 are configured to detect proximity of an axially proximal (e.g. proximal to the stator) face 20 of the rotor locking body 6 to be within a predetermined distance range.

In particular, the first and second optical sensors 16, 17 may be configured to detect whether the areas 18, 19 of the axially proximal face 20 of the rotor locking body 6 are within a predetermined (axial) distance range or are closer than a (axial) threshold distance.

In the figures, the circumferential direction is indicated with reference sign 21, the axial direction is parallel to rotation axis 4. The first optical sensor 16 may for example include a light source which emits illumination light 22 towards the rotor, in particular the axially proximal face 20 of the rotor locking body 6 from which reflection light 23 is reflected and detected by a detector of the first optical sensor 16. Depending on the intensity of the detected reflected light 23, the optical sensor 16 may then determine whether the reflection surface at the rotor is (or is not) within a predetermined distance range or whether it is (or is not) closer than a threshold distance. Similar to the first optical sensor, also the second optical sensor 17 may operate.

In the embodiment illustrated in Fig. 2, the sensor system 10 further comprises an inductive sensor 24 which is also mounted at the position sensor bracket 15 and thus at the stator. The inductive sensor 24 is mounted at a position deviating by the circumferential distance cd3 from the circumferential position for example of the second optical sensor 17. The circumferential distance difference cd3 is smaller than an (circumferential) extent cd4 of the axially proximal face 20 encircling the rotor locking opening 7 (see e.g. Fig. 3). Thus, concurrently, the first optical sensor 16, the second optical 17 as well as the inductive sensor 24 may monitor the distance of the three areas 18, 19, 25 on the axially proximal face 20 of the rotor locking body 6 to be within a predetermined distance range or not.

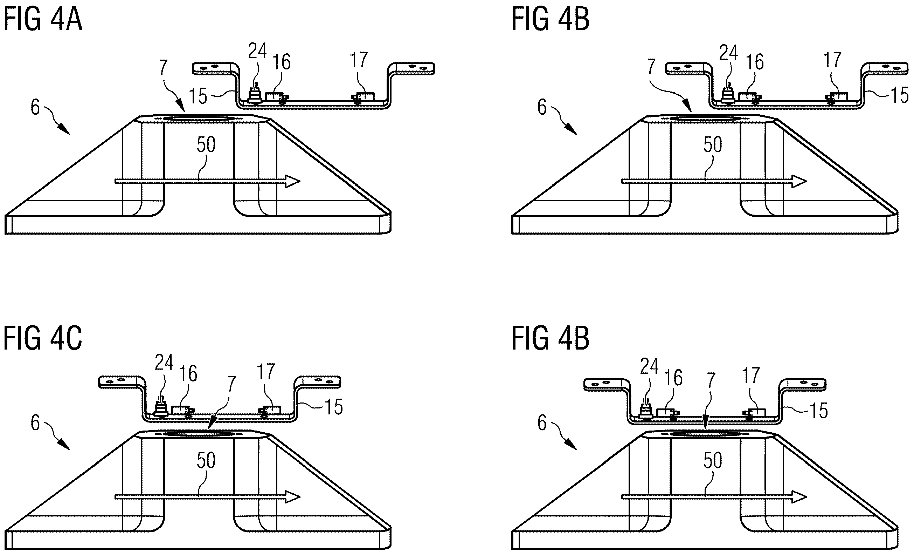

Those indications may advantageously be utilized for detecting whether the rotor 3 is in a rotor locking position, as is explained with reference to the Figs. 4A,B,C,D. In particular, the sensor data 12 may include binary output signals indicating whether a portion of the rotor is within a predetermined distance range or smaller than a threshold distance. For example, high (binary "1") may indicate that a respective rotor portion is within the selected predetermined distance and low (binary "0") may indicate that the respective portion is not within the predetermined distance range.

For example, the optical sensors 16, 17 may indicate whether a portion of the rotor is within a distance range of between 30 mm and 60 mm, for example. Furthermore, the inductive sensor 24 may be configured to detect whether a metallic portion of the rotor is within a distance range of for example between 30 mm and 60 mm. Other values are possible and may be configured considering the materials of the detected rotor portions and also considering surface characteristics, in particular reflectance.

When the rotor house rotates (direction 50) slowly and the rotor locking body 6 reaches the inductive sensor 24, as illustrated in Fig. 4A, the inductive sensor 24 will output a "high" signal, but the two optical sensors 16, 17 will give "low"-signals. Thereupon, the rotator continues rotating reaching the configuration as is illustrated in Fig. 4B. Thus, the inductive sensor 24 reaches the rotor locking opening 7 therefore sending a "low"-signal. The first optical sensor 16 probes one portion of the edge or the axially proximal face 20 encircling the rotor locking opening 7 and therefore outputs a "high"-signal, while the second optical sensor 17 does not yet detect any material to be closer than a threshold distance and therefore outputs a "low"-signal.

Rotation continues to reach the configuration as is illustrated in Fig. 4C. Thereupon, the inductive sensor 24 reaches the edge of the locking hole 7 and therefore emits or outputs a "high"-signal. The first optical sensor 16 is arranged above the locking hole 7 and thus outputs a "low"-signal. The second optical 17 is arranged close to the edge or the axially proximal face of the rotor locking body 6 and therefore outputs a "high"-signal or a "low"-signal.

Rotation still continues to reach the situation as is illustrated in Fig. 4D. Thereby, the optical sensors 16, 17 indicate presence of rotor portions to be within a distance range and thus each output "high"-signals. Further, the inductive sensor 27 also detects metallic material to be within a distance range and therefore also outputs a "high"-signal. Thus, the output pattern of the sensors is high, high, high, indicating that the rotor locking position is reached.

The detection may be an automatic system and it could be controlled by remote. According to an embodiment of the present invention, the position system may consist of a simple bracket (for example bracket 15 illustrated in Fig. 2), two optical sensors (for example 16, 17) and one inductive sensor (for example 24). The sensors may be mounted through a hole, on the drive and stator plate which may be located 30° from the nearest rotor lock and in the same radius on the drive and stator plate as the rotor locks. The position system may be fixed and may measure on the rotating rotor lock blocks mounted in bottom of rotor house. The two optical sensors may measure on each side of the locking hole in one of the twelve rotor lock blocks. The inductive sensor may be a safety device connected to the safety PLC. Safety may have two functions in the system. First, it may help to confirm when the rotor block is close to the position system and second it may confirm to the safety PLC that the optical sensors are measuring on a rotor lock block.

**Fig. 5** schematically illustrates a wind turbine 40 according to an embodiment of the present invention. The wind turbine comprises a wind turbine tower 41 and a nacelle 42 mounted on top of the tower. Furthermore, the wind turbine comprises a generator system 1 according to an embodiment of the present invention located within the nacelle 42. The rotor 3 is coupled to a hub 43 at which plural rotor blades 44 are mounted.

**Fig. 6** schematically illustrates the electric motor system 13 being mounted on a support plate or support frame 24 of the stator together with a rotor 3 positioned in a rotor locking position. As can be seen in Fig. 6, the locking pin 8 is inserted into the rotor locking opening 7 provided in the rotor lock block 6 which is mounted on the rotor 3.

The locking bolt 8 or locking mandrel 8 is moved using the electric motor system 13. The electric motor system 13 comprises a motor 25 which is provided for example by control signals 14, for example provided from the processor 11 illustrated in Fig. 2. An output shaft 27 of the electrical motor 25 engages a mechanical screwjack 26 which is connected to the locking bolt 8. Rotating the drive shaft 27 of the electrical motor 25 causes translating (indicated with the double arrow 28) of the locking pin or mandrel 8. The mandrel 8 is housed in a housing 29.

Referring further to Fig. 6, the screwjack spindle is connected to the mandrel 8. Rotor lock housing, mandrel and flanges for locking screwjack spindle is the same as for a conventional hydraulic rotor lock system. The electric motor system 13 is controlled by a frequency converter. Thereby, it is possible to monitor where the mandrel is placed in the 200 mm movement from engaged to disengaged position or back. The frequency converter may be able to monitor if one mandrel is stuck when the rotor locks are disengaging. The mandrel movement may be stopped or the mandrel movement end stop may be controlled by the engagement/disengagement safety sensors. One of these sensors monitor or emit or send a high signal and the motor brake will stop mandrel movement.

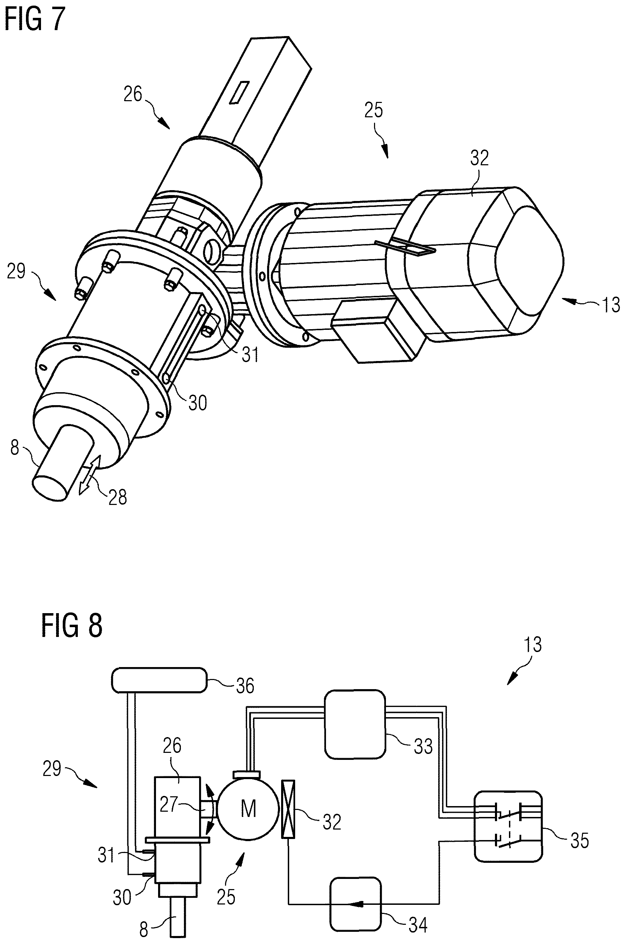

As can be seen from **Fig. 7****,** the electric motor system 13 comprises engagement sensor 30 as well as a disengagement sensor 31 which may be configured to detect whether the locking mandrel 8 is engaged or disengaged from the rotor locking opening (not shown in Fig. 7). The electric motor 25 comprises in the embodiment illustrated in Fig. 7, 6 furthermore a motor brake 32.

**Fig. 8** illustrates the electric motor system 13 coupled to the mandrel housing 29 including the locking mandrel 8. A frequency converter 33 is coupled to the electric motor 25 whose drive shaft 27 is engaged with the mechanical screwjack 26 for moving the locking bolt or mandrel 8. The disengagement sensor 31 and engagement sensor 30 send detection signals to a safety PLC 36. The electrical motor brake 32 is actuated by a brake rectifier 34. The frequency converter 33 as well as the brake rectifier 34 are connected to a contact relay 35. The converter 33 and/or the brake rectifier 34 may be controlled by not illustrated control signals.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Rotor locking system (5) for locking a rotor of a wind turbine, the wind turbine comprising a stator relative to which the rotor is rotatable, the rotor locking system comprising:
at least one rotor locking body (6) mounted on the rotor (3) and providing a rotor locking opening (7);
at least one locking bolt (8) insertable into the rotor locking opening (7) when the rotor of the wind turbine is in a rotor locking position;
an electric motor system (13) configured to insert the locking bolt (8) into and/or to withdraw the locking bolt (8) from the rotor locking opening (7).

2. Rotor locking system (5) according to the preceding claim, wherein the electric motor system (13) comprises:
an electric motor having a drive shaft (27);
a mechanical screwjack (26) connected to the locking bolt (8);
the mechanical screwjack (26) being engaged by the drive shaft such that rotating the drive shaft (27) of the electric motor (13, 25) causes translating the locking bolt (27);
in particular a brake (32).

3. Rotor locking system according to any one of the preceding claims, further comprising at least one of:
a disengagement sensor (31) and/or engagement sensor (30) connected to the electric motor system (25) or a brake (32) of the electric motor system;
a frequency converter (33) connected to the motor system.

4. Rotor locking system according to any one of the preceding claims, further comprising an arrangement (9) for detecting when the rotor of the wind turbine is in the rotor locking position for locking the rotor, the arrangement comprising:
a sensor system (10) mounted on the stator and/or the rotor and providing sensor output data (12);
a processor (22) configured:
to analyse the sensor output data (12);
to indicate when the rotor locking position is reached based on the analysed sensor output data.

5. Method for locking a rotor (3) of a wind turbine (40), the wind turbine comprising a stator (2) relative to which the rotor is rotatable, the method comprising: inserting a locking bolt (8) from the stator (2) into a rotor lock opening (7) when the rotor is in a rotor locking position, thereby using an electric motor system (13), in particular of a rotor locking system according to one of the preceding claims.

6. Method according to the preceding claim, further comprising performing
a method of detecting when the rotor (3) is in the rotor locking position for locking the rotor, the method comprising:
rotating the rotor (3);
receiving sensor output data (12) from a sensor system (10) sensitive to distance between stator and rotor components;
analysing the sensor output data (12);
indicating when the rotor locking position is reached based on the analysed sensor output data.

7. Method according to any of the preceding claims 5 or 6,
wherein while in the rotor locking position a rotor locking body (6) mounted on the rotor (3) is at a predetermined position relative to the stator (2) and/or the sensor system (10),
the rotor locking body (6) including the rotor lock opening (7), the stator including the locking bolt (8) insertable into the rotor lock opening (7) when the rotor is in the rotor locking position.

8. Method according to any one of the preceding claims 5 to 7, wherein the sensor system (10) comprises at least one of:
at least one, in particular two, optical sensor (16, 17) configured to detect when a portion of the rotor lock body (6) is in a predetermined distance range;
an inductive sensor (24) configured to detect when a metallic portion of the rotor lock body (6) is within a predetermined distance range.

9. Method according to any one of the preceding claims 5 to 8,
wherein the rotor (3) is an outer rotor configured to rotate radially outwards from the stator (2),
wherein the rotor locking body (6) is configured as a substantially metallic body having a axially proximal face (20) having an, in particular circular, edge (20a) encircling the rotor lock opening (7), the metallic body having a cylindrical recess extending axially outwards from the edge and providing the rotor lock opening (7),
wherein the sensor system (10) is configured to detect when one or more portions of the axially proximal face (20) or the edge (20a) are or are not within a predetermined distance range, in particular smaller than a threshold distance.

10. Method according to any one of the preceding claims 5 to 9, wherein the sensor system includes a first optical sensor (16) and a second optical sensor (17), each including a light source and a light detector, mounted at the stator at positions differing in their circumferential position by a circumferential distance (cd1) corresponding to or being slightly greater than a diameter (cd2) of the edge (20a) of the rotor locking body (6).

11. Method according to the preceding claim, wherein the sensor system (10) includes an inductive sensor (24) mounted at the stator at a position having a circumferential distance (cd3) to a position of the first or the second optical sensor (16, 17) being smaller than a circumferential extent (cd4) of the axially proximal face (20) of the rotor locking body (6).

12. Method according to the preceding claim, wherein it is indicated that the rotor locking position is reached when the two optical sensors (16, 17) as well as the inductive sensor (24) indicate rotor material to be present within a predetermined distance range or smaller than a threshold distance.

13. Method according to any one of the preceding claims 5 to 12, wherein the sensor output data (12) include two or more binary output signals,
wherein analysing the sensor output data comprises comparing the binary output signals with a predetermined pattern.

14. Generator system (1) comprising:
a stator (2);
a rotor (3) rotatable relative to the stator:
a rotor locking system (5) according to any of claims 1 to 4.

15. Wind turbine (40), including:
a wind turbine tower (41);
a wind turbine nacelle (42) rotatably mounted on top of the tower;
a generator system (1) according to the preceding claim arranged in the nacelle.
